# EUROPEAN PATENT SPECIFICATION

(11) **EP 3 975 523 B1**
(45) Date of publication and mention of the grant of the patent: **11.06.2025**
(21) Application number: 21198832.4
(22) Date of filing: 24.09.2021
(51) Int. Cl.: H04L 9/40, H04W 12/088, H04L 41/0213, H04L 41/0806, H04L 41/40, H04L 41/0895

(54) **ENHANCED SECURITY MECHANISMS FOR CELLULAR COMMUNICATION SYSTEMS**
VERBESSERTE SICHERHEITSMECHANISMEN FÜR ZELLULARE KOMMUNIKATIONSSYSTEME
MÉCANISMES DE SÉCURITÉ RENFORCÉS POUR SYSTÈMES DE COMMUNICATION CELLULAIRES

(30) Priority: 29.09.2020 FI 20205940
(43) Date of publication of application: 30.03.2022
(73) Proprietor: Nokia Technologies Oy, 02610 Espoo (FI)
(72) Inventor: FRAUNHOLZ, Daniel, Munich (DE); JERICHOW, Anja, Grafing bei München (DE); MANGE, Genevieve, Stuttgart (DE); MANNWEILER, Christian, Munich (DE); ROST, Peter, Heidelberg (DE); RIEGEL, Maximilian, Nuremberg (DE)
(74) Representative: Script Intellectual Property LLP

(56) References cited:
- US-A1- 2013 031 621
- "3rd Generation Partnership Project; Technical Specification Group Services and System Aspects; Study on security for 5GS enhanced support of Vertical and LAN Services; (Release 16)", 7 October 2019 (2019-10-07), XP051810845, Retrieved from the Internet <URL:https://portal.3gpp.org/desktopmodules/Specifications/SpecificationDetails.aspx?specificationId=3544> [retrieved on 20191007]

## Description

### FIELD

Various example embodiments relate in general to enhanced security mechanisms for cellular communication systems.

### BACKGROUND

Security needs to be ensured in various cellular communication systems, such as in 5G systems developed by the 3rd Generation Partnership Project, 3GPP. The 3GPP still develops 5G systems and there is a need to provide improved methods, apparatuses and computer programs to enhance security in 5G systems. Such improvements may be useful in other cellular communication systems as well.

The 3GPP document "3rd Generation Partnership Project; Technical Specification Group Services and System Aspects; Study on security for 5GS enhanced support of Vertical and LAN Services; (Release 16)", 3GPP DRAFT; S3-193523 TR 33.819 UPDATE, 3RD GENERATION PARTNERSHIP PROJECT (3GPP), MOBILE COMPETENCE CENTRE ; 650, ROUTE DES LUCIOLES ; 01 F-06921 SOPHIA-ANTIPOLIS CEDEX ; FRANCE , 7 October 2019 (2019-10-07), studies security enhancements to 5GS that are required to fulfil Stage-I service requirements in vertical domains defined in TS 22.261 and TS 22.104 and addresses the solutions described by TR 23.734 and TR 23.725 studies.

US 2013/031621 A1 presents a method for applying a host security service to a network is described herein. The network may include a host device and a network device. The network device may receive a request for security-based filtering. The request includes filtering parameters that restrict traffic between the host device and the network device. It is determined whether the filtering parameters conflict with an initial filtering configuration. The filtering parameters may be applied to traffic through the network device.

### SUMMARY

According to some aspects, there is provided the subject-matter of the independent claims. Some example embodiments are defined in the dependent claims.

The scope of protection sought for various example embodiments of the invention is set out by the independent claims. The example embodiments and features, if any, described in this specification that do not fall under the scope of the independent claims are to be interpreted as examples useful for understanding various example embodiments of the invention.

According to a first aspect of the present invention, there is provided an apparatus, comprising means for receiving, by a network function in a cellular communication system, configuration information required to initialize at least one other network function to operate according to a port-based network access control standard and a port-based medium access security standard, wherein the network function is configured to provide time sensitive networking or communications, and the configuration information comprises a storage format of the port-based network access control standard and a storage format of the port-based medium access security standard and means for configuring the at least one other network function to operate according to the port-based network access control standard and the port-based medium access security standard based on the configuration information.

### BRIEF DESCRIPTION OF THE DRAWINGS

FIGURE 1 illustrates an exemplary network scenario in accordance with at least some example embodiments;
FIGUREs 2a and 2b illustrate flow charts of a first scenario in accordance with at least some example embodiments;
FIGUREs 3a and 3b illustrate flow charts of a second scenario in accordance with at least some example embodiments;
FIGURE 4 illustrates an example apparatus capable of supporting at least some example embodiments;
FIGURE 5a illustrates an OAM/m-plane configuration in accordance with at least some example embodiments;
FIGURE 5b illustrates a CNC/c-plane configuration in accordance with at least some example embodiments;
FIGURE 6 illustrates a flow graph of a first method in accordance with at least some example embodiments; and
FIGURE 7 illustrates a flow graph of a second method in accordance with at least some example embodiments.

### EXAMPLE EMBODIMENTS

Security of cellular communication systems may be improved by the procedures described herein. More specifically, security of cellular communication systems may be improved by configuring by a Network Function, NF, at least one other NF located in a cellular communication system with configuration information which comprises a storage format, like a Management Information Base, MIB, module, of a port-based network access control standard (such as an Institute of Electrical and Electronics Engineers, IEEE, 802.1X standard) and a storage format of a port-based medium access security standard (such as a IEEE 802.1AE standard). The at least one other NF may be configured to operate as a boundary interface to other networks and as a security endpoint, thereby enabling security features at boundary interfaces of the cellular communication system, such as a 5G System, 5GS, for secure integration to said other networks.

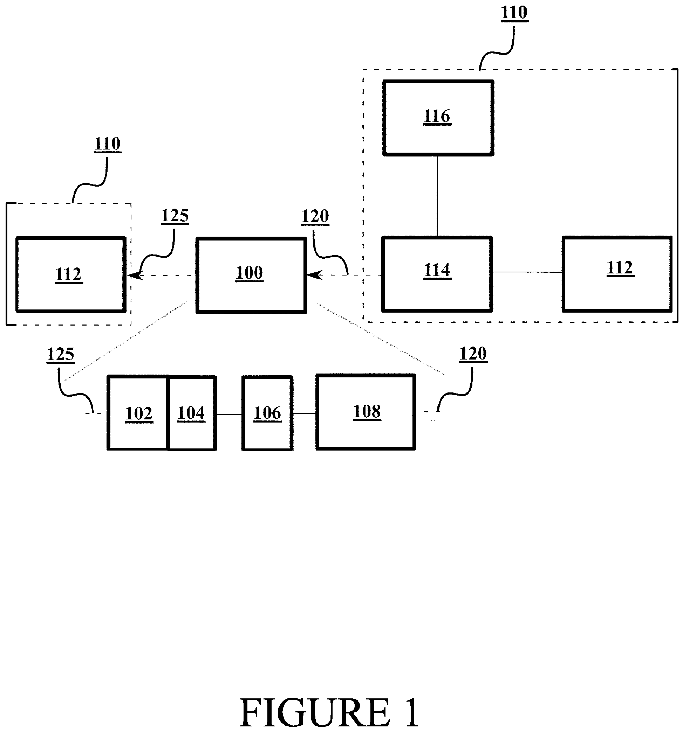

FIGURE 1 illustrates an exemplary network scenario in accordance with at least some example embodiments. More specifically, FIGURE 1 illustrates integration of a cellular communication system, such as a 5GS, and IEEE 802.1 bridge network using parts of the IEEE Time Sensitive Networking, TSN, toolset. In FIGURE 1 protected (generalized) Precision Time Protocol, PTP, communication (e.g., RFC 7384 compliant) is denoted with solid lines and unprotected (g)PTP communication (potential attack surface) is denoted with dashed lines. The cellular communication system is denoted by 100. The cellular communication system 100 may comprise a Device-Side TSN Translator 102, DS-TT, a User Equipment 104, UE, a Base Station 106, BS, such as a gNB, a User Plane Function, UPF, which may include a Network-Side TSN Translator, NW-TT, 108. The exemplary network scenario of FIGURE 1 also comprises a TSN network 110 and the TSN network may further comprise TSN endpoints 112, TSN nodes 114 (e.g., TSN bridges and/or TSN switches) and a TSN Grand Master, GM, clock 116. The TSN network 110 may be a TSN network standardized by 3^{rd} Generation Partnership Project, 3GPP, in TS 23.501 for example.

The cellular communication system 100, such as a 5GS standardized by 3GPP may be able to integrate into the TSN network 110 as a time aware bridge. An ingress interface 120 of the cellular communication system 100 from the TSN network 110 may be the NW-TT 108 and an egress interface 125 of the cellular communication system 110 towards the TSN network 110 may be the DS-TT 102. The DS-TT 102 and the NW-TT 108 may process and forward communications according to mechanisms of the TSN 110. Several protocols may be supported by both, the DS-TT 102 and the NW-TT 108. An example is time synchronization (e.g., gPTP as defined in the IEEE 802.1AS standard, but also PTP as defined in the IEEE 1588-2018 standard is possible), which has to be achieved to allow TSN integration of the cellular communication system 100.

From the TSN network 110 outside of the cellular communication system 100, TSN nodes (such as TSN endstations 112 and TSN bridges or switches 114) may be connected to the cellular communication system 100 via the DS-TT 102 and the NW-TT 108. At least some of the TSN nodes 112, 114 may also be connected to each other in the TSN network 110. Since the cellular communication system 100 may have similar properties as other TSN bridges/switches 114 in the network, several cellular communication systems 100 may be connected to each other to form a larger TSN network.

If the DS-TT 102 and the NW-TT 108 only have security requirements defined, e.g., in the 3GPP SA3, for communication between them inside the cellular communication system 100, but not for ingress and egress communication from and to the TSN network 110, respectively, the communication between the cellular communication system over the DS-TT 102 and/or the NW-TT 108 and external TSN nodes 112, 114 may be unprotected. Unprotected communication in a TSN network may cause severe security risks.

Using time synchronization as an example, a non-compliant cellular communication system may not meet security requirements (defined in RFC 7384 for example) in a TSN domain and thus be unusable as a TSN bridge or if used pose a security risk to other nodes in the network domain. TSN domains which do not meet mandatory security requirements, e.g., from RFC 7384, for time protocols in packet switched networks are vulnerable to:
- Rogue master attacks: A malicious node may send tampered messages to win the Best Master Clock Algorithm, BMCA, -based selection of the GM clock node 116 for the TSN domain. Being the GM clock node 116, the malicious node may distribute manipulated times (accuracy degradation and false time);
- Spoofing: A malicious node may pose as a GM clock node 116 or intermediate node with high clock priority to distribute manipulated times (accuracy degradation and false time);
- Packet interception: In a man-in-the-middle scenario, an attacker may intercept (g)PTP packets and remove them to prevent synchronization (Denial of Service, DoS), manipulate the packet delay (accuracy degradation and false time) or manipulate the packet content (accuracy degradation and false time);
- Layer2/Layer3 DoS attacks: Malicious nodes may use Internet Protocol, IP, spoofing, Address Resolution Protocol, ARP, spoofing, Medium Access Control, MAC, flooding and other attack techniques on Layer2/Layer3 to prevent (g)PTP communication due to DoS. These attacks may also effect other services in the network domain.

The impacts of these attacks comprise system failure due to DoS, accuracy degradation and false times being synchronized. Besides time synchronization, unprotected communication in TSN networks may be subject to manipulation of control messages for production systems (e.g. robots), resulting in compromised systems controls or DoS conditions.

Embodiments of the present invention therefore provide enhanced security mechanisms for cellular communication systems, such as 5GSs. In some embodiments, configuration of security mechanisms at boundary interfaces of the cellular communication system 100, such as DS-TT 102, UE 104 and NW-TT 108, is provided. More specifically, in some embodiments, support for a port-based network access control standard, such as the IEEE 802.1X standard, and a port-based medium access security standard, such as the IEEE 802.1AE standard, security features at the boundary interfaces of the cellular communication system 100 is provided, thereby enabling secure integration of the cellular communication system 100 to other networks.

As an example, a new configuration option is introduced by MIB modules in m-plane or c-plane, possibly along with a new Information Object Class, IOC, for a TSN Application Function, AF, for example. Furthermore, a port management information table may be extended to enable exchanging configuration information corresponding to the new configuration option and management of the DS-TT 102 and the NW-TT 108. Even though MIBs are used as an example of a storage format (i.e., a database format), embodiments of the present invention may be exploited in case of any storage format. For instance, in case of NETCONF/RESTCONF, the storage format may be a YANG model.

An NF in the cellular communication system 100 may receive configuration information required to initialize at least one other NF to operate according to the port-based network access control standard and the port-based medium access security standard, wherein the at least one other NF may be configured to implement the port-based network access control standard and the port-based medium access security standard. The at least one other NF may be the DS-TT 102 and/or the NW-TT 108 in IEEE TSN scenarios when the NF is a TSN AF. Alternatively, the at least one other NF may be the UE 104 and/or the UPF in native TSC scenarios when the NF is an SMF. The at least one other NF may be an NF which is configured to interface the TSN network 110 on a user-plane. The configuration information may comprise a MIB module of the port-based network access control standard and a MIB module of the port-based medium access security standard, e.g., the configuration information may be defined using two MIBs, such as IEEE8021X-PAE-MIB and IEEE8021-SECY-MIB. In case of IEEE standards, the configuration information may be referred to as "attributes", however in 3GPP these kind of parameters are referred to as "information".

The NF may be a time sensitive networking application function configured to provide time sensitive networking or communications. For instance, the cellular communication system 100 may be configured to operate in a TSN bridge mode and in such a case the NF and the at least one other NF may be able to, and be configured to, transmit and receive Ethernet frames of a TSN flow according to a schedule. As an alternative to the TSN bridge mode, the NF may be a Session Management Function, SMF, configured to operate in a Native Time Sensitive Communication, TSC, mode. Thus, the NF and the at least one other NF may be able to, and be configured to, provide deterministic communication with high reliability and availability.

The NF, such as the TSN AF or the SMF, may receive the configuration information from m-plane via Orchestration & Automation Management, OAM, or from c-plane via a configuring NF, such as Network Exposure Function, NEF, SMF or Central Network Controller, CNC. That is to say, the NF may receive the configuration information from m-plane via OAM or from c-plane from the configuring NF, possibly in an IOC.

The NF, such as the TSN AF or the SMF, may receive the configuration information and also maintain (i.e. store, update) the configuration information locally. Furthermore, the NF may modify the data based on other factors. Then, the NF may forward the configuration information in the port management information container (which may be a different data format than the data was received at the TSN AF/SMF) to the at least one other NFs that implements 802.1x/AE, i.e. the DS-TT 102 and/or the NW-TT 108 (IEEE TSN bridge mode) or the UE 104 and/or the UPF (native TSC mode). The at least one other NF then initializes and operates 802.1X/AE.

As an example, the NF may be a TSN AF and in such a case the configuration information of the TSN AF with IEEE 802.1X and IEEE 802.1AE parameters may be received from OAM via m-plane. The TSN AF may need to be in a Network Resource Model, NRM, of the cellular communication system, e.g., in a 5G NRM as defined in the 3GPP standard specification TS 28.541, in addition to other NFs (e.g., Access and Mobility Function AMF, SMF, etc.).

For the integration of the TSN AF into the NRM of the cellular communication system 100, e.g. integration into the 3GPP standard specification TS 28.541, the following steps may need to be considered:
- a new IOC for TSN AF (or subclass of generic AF IOC);
- include default attributes (inherited from NF parent classes);
- include a minimal set of attributes from IEEE MIBs for the port-based network access control standard (e.g., IEEE 802.1X (IEEE8021X-PAE-MIB)) and for the port-based medium access security standard (e.g., IEEE 802.1AE (IEEE8021-SECY-MIB)). The minimal set of attributes may refer to the smallest set of parameters required to provide the intended functionality, to reduce complexity.

Moreover, in some embodiments, the NF may transmit the configuration information to at least one other NF located in the cellular communication system 100. Said at least one other NF may be configured to operate as a boundary interface to other networks and as a security endpoint (e.g., the Port Access Entity, PAE, terminating MACsec Key Agreement, MKA, protocol and MACsec secured channel). Said at least one other NF may be an NF that implements the port-based network access control standard (e.g., the IEEE 802.1X standard) and the port-based medium access security standard (e.g., the IEEE 802.1AE standard). Upon receiving the configuration information, said at least one other NF may configure itself to operate according to the port-based network control standard and the port-based medium access security standard based on the configuration information. In embodiments of the present invention, operating according to the port-based network control standard and the port-based medium access security standard means performing cryptographic operations on received data and data to be send (e.g. encrypting and decrypting) according to the port-based network control standard and the port-based medium access security standard based on the configuration information. In addition, operate may refer to performing operations to facilitate the cryptographic operation (e.g. maintaining timers and other local data).

An example is the integration of the cellular communication system 100, such as 5GS, as an IEEE TSN bridge. In this scenario, said at least one other NF may comprise the DS-TT 102 and the NW-TT 108 which may be the interfaces connecting the cellular communication system 100 to the TSN network 110. In order to provide protection on OSI layer 2 (Ethernet frames) including time synchronization protocols, such as gPTP time sync frames, configuration and management information may be transmitted to said at least one other NF, i.e., to the DS-TT 102 and NW-TT 108, or the UE 104 and the UPF.

Said at least one other NF, such as the DS-TT 102 and NW-TT 108 or the UE 104 and the UPF, may be configured from the NF, e.g., from the TSN AF, via a port management information container. For instance, the NF may transmit the configuration information to said at least one other NF in a port management information table.

As an example, to provide the configuration information to the DS-TT 102 and/or the NW-TT 108, the port management information table, as defined in the 3GPP standard specification TS 23.501, section 5.28, for example, may be extended to include a minimal set of parameters, i.e., the required set, for the 802.1X MIB (IEEE8021X-PAE-MIB) and the 802.1AE MIB (IEEE8021-SECY-MIB). The port management information container may be used to transparently configure and manage the DS-TT 102 and the NW-TT 108 from the NF, such as the TSN AF. The port management information container may be used to transport the port management information table, but in terms of content there may be no difference.

It should be noted that IEEE 802.1X and IEEE 802.1AE MIBs are port-specific and thus, a bridge management information table cannot be used as an alternative to the port management information table. Moreover, at least in case of 5G, 5GS bridge ports at the DS-TT 102 and the NW-TT 108 may need to operate in supplicant and authenticator modes, respectively.

Another example is the usage of IEEE 802.1X and 802.1AE in a Native TSC scenario. The native TSC scenario may refer to a scenario, wherein the cellular communication system is not used as a IEEE TSN bridge. In this scenario, the boundary interfaces may be located at the UE 104 and the UPF. Thus management and configuration information may need to be provided to both, the UE 104 and the UPF, by the NF. In this case, the NF may be an SMF and the SMF may provide the configuration information instead of the TSN AF. Consequently, the SMF IOC may be extended to include both MIBs, i.e., the MIB of the IEEE 802.1X and the MIB of the IEEE 802.1AE. If the SMF provides the configuration information to the UE 104, the SMF may also configure the UPF for endpoint termination of a secured channel. A major advantage of this more general approach is that, if the cellular communication system is not used as a TSN bridge (i.e. Native TSC), the secured channels can still be configured and operated. It should be noted that if the UE 104 is used as a security endpoint, the cellular communication system 100 may not operate as a TSN bridge, because the DS-TT 102 cannot access and process information encrypted in the secured channel terminated only after traversing the DS-TT 102.

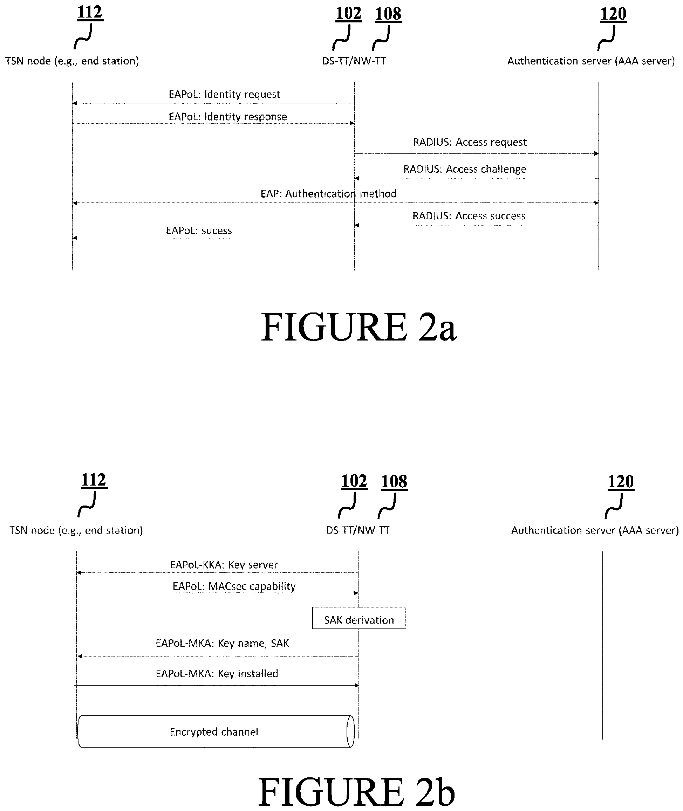

FIGUREs 2a and 2b illustrate flow charts of a first scenario in accordance with at least some example embodiments. In the scenario shown in FIGUREs 2a and 2b the cellular communication system 100 (i.e., the DS-TT 102 and/or the NW-TT 108) may communicate with a TSN node, such as the TSN endstation 112. The TSN endstation 112 may be limited to a supplicant functionality while the cellular communication system 100 (i.e., the DS-TT 102 and/or the NW-TT 108) may be configured to provide an authenticator functionality. The authentication server 120 may be an entity in the TSN network 110 but not in the cellular communication system 100, such as the 5GS. While possibly being an additional functionality that the cellular communication system 100 may provide to the TSN network 110, the case with the authentication server 120 already existing in the TSN network 110 is considered. This is already a prerequisite from IEEE 802.1X and IEEE 802.1AE for the protection mechanisms to function properly. Thus, the cellular communication system 100 (i.e., the DS-TT 102 and/or the NW-TT 108) may assume that the authentication server 120 is available. The DS-TT 102 and/or the NW-TT 108 may directly contact the authentication server 120 for identity verification of the supplicant (i.e., the TSN endpoint 112, like an IEEE TSN node configured to operate in 802.1X supplicant mode) via the RADIUS/DIAMETER protocol (as already supported in the 3GPP standard specification TS 33.510 clause 5 and detailed in the 3GPP standard specification TS 29.229). A network address of the authentication server 120 may be a part of the configuration information and thus known to the DS-TT 102 and/or the NW-TT 108.

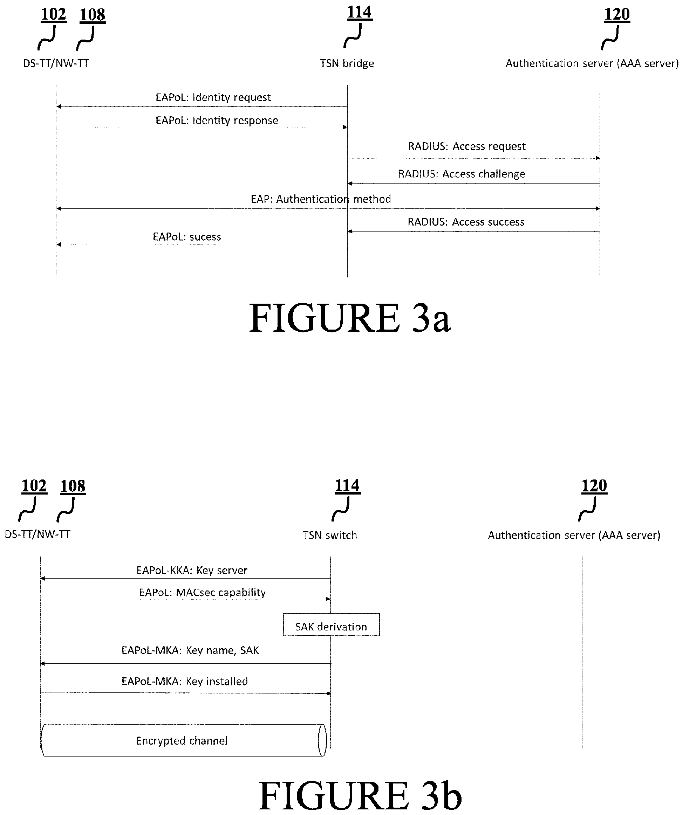

FIGUREs 3a and 3b illustrate flow charts of a second scenario in accordance with at least some example embodiments. In the scenario shown in FIGUREs 3a and 3b, the cellular communication system 100 (i.e., the DS-TT 102 and/or the NW-TT 108) may communicate with a TSN node 114 which has authenticator capabilities. In FIGURE 3a the TSN node 114 is a TSN bridge and in FIGURE 3b the TSN node 114 is a TSN switch. As the TSN node 114 has authenticator capabilities, the cellular communication system 100 (i.e., the DS-TT 102 and/or the NW-TT 108) may be able to operate in the supplicant mode. Procedure shown in FIGUREs 3a and 3b is otherwise the same as the procedure shown in FIGUREs 2a and 2b, but the difference is that in the scenario of FIGUREs 3a and 3b the DS-TT 102 and/or the NW-TT 108 may provide authentication information via EAPoL to the TSN node 114 (TSN bridge or the TSN switch) and the TSN node 114 may verify the identity with the authentication server 120 via RADIUS/DIAMETER as described in the IEEE 802.1X standard.

In some embodiments, an IEEE 802.1X MIB may comprise at least one of the following parameter groups that may need to be configured to the NF, such as the TSN AF, the DS-TT 102 and the NW-TT 108: PAE System, NID, PAE, LogonNIDs, Announcer, Eapol Statistics, KaY, Authenticator, Supplicant, LogonProcess, SessionStatistics, Participants, Listener, Announce and Announcement.

In some embodiments, an IEEE 802.1AE MIB may comprise at least one of the following parameter groups that may need to be configured to the NF, such as the TSN AF, the DS-TT 102 and the NW-TT 108: SecYSystem, SecY, Verification, Used_Interface, CipherSuite, CipherSuiteControl, CurrentCipherSuite, TransmitSC, Generation, ReceiveSC, Data_key, TransmitSA, TrafficClass, ReceiveSA and Provided_Interface.

In some embodiments, the configuration information may be integrated into the 3GPP standard specifications TS 28.541 and TS 23.501, clause 5.28 (TSN bridge mode). While not being part of the current 3GPP specifications, the IOC for the NF, such as the TSN AF, may be designed in the same way as IOCs for already existing NFs defined in the 3GPP standard specification TS 28.541. In the table below, an example of the IOC table for the NF is given, wherein the attribute "Minimal Sec-MIB" has been added.

| **Attribute name** | **Support Qualifier** | **isReadable** | **isWritable** | **isInvariant** | **isNotifyable** |
|---|---|---|---|---|---|
| pLMNIdList | M | T | T | F | T |
| sBIFQDN | M | T | T | F | T |
| sNSSAIList | CM | T | T | F | T |
| managedNFProfile | M | T | T | F | T |
| commModelList | M | T | T | F | T |
| Minimal Sec-MIB | O | ... | ... | ... | ... |

In some embodiments, the configuration information may be integrated into the 3GPP standard specifications in the 3GPP standard specification TS 23.501, clause 5.28. In the table below an exemplary excerpt of a section of the table is given.

| **Gate configuration information** | | | | |
|---|---|---|---|---|
| **GateEnabled** | X | X | RW | IEEE 802.1Q [98] |
| | | | | Table 12-29 |
| **AdminBaseTime** | X | X | RW | IEEE 802.1Q [98] |
| | | | | Table 12-29 |
| **AdminControlList** | X | X | RW | IEEE 802.1Q [98] |
| | | | | Table 12-29 |
| **AdminCycleTime (see Note 3)** | X | X | RW | IEEE 802.1Q [98] |
| | | | | Table 12-29 |
| **AdminControlListLength (see Note 3)** | X | X | RW | IEEE 802.1Q [98] |
| | | | | Table 12-28 |
| **Tick granularity** | X | X | R | IEEE 802.1Q [98] |
| | | | | Table 12-29 |

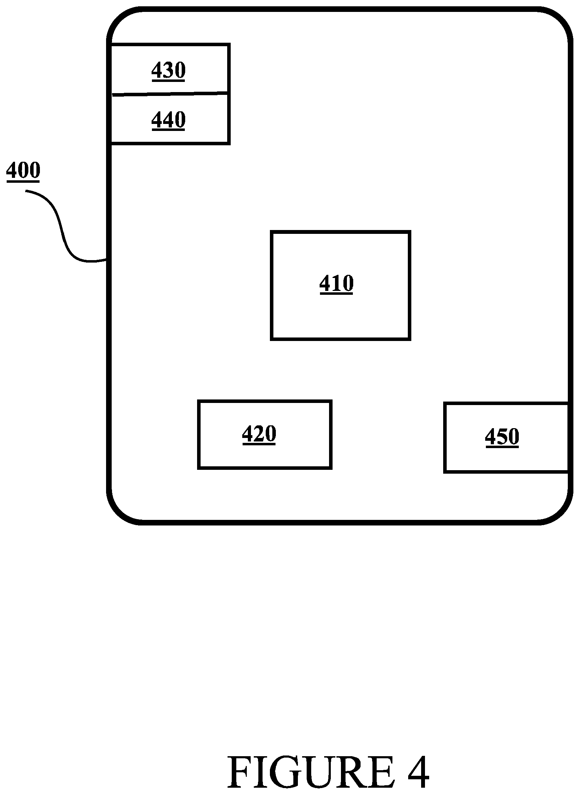

FIGURE 4 illustrates an example apparatus capable of supporting at least some example embodiments. Illustrated is device 400, which may comprise, for example, the NF or the at least one other NF, or a device controlling functioning thereof. Comprised in device 400 is processor 410, which may comprise, for example, a single- or multi-core processor wherein a single-core processor comprises one processing core and a multi-core processor comprises more than one processing core. Processor 410 may comprise, in general, a control device. Processor 410 may comprise more than one processor. Processor 410 may be a control device. Processor 410 may comprise at least one Application-Specific Integrated Circuit, ASIC. Processor 410 may comprise at least one Field-Programmable Gate Array, FPGA. Processor 410 may comprise an Intel Xeon processor for example. Processor 410 may be means for performing method steps in device 400, such as determining, causing transmitting and causing receiving. Processor 410 may be configured, at least in part by computer instructions, to perform actions.

A processor may comprise circuitry, or be constituted as circuitry or circuitries, the circuitry or circuitries being configured to perform phases of methods in accordance with example embodiments described herein. As used in this application, the term "circuitry" may refer to one or more or all of the following: (a) hardware-only circuit implementations, such as implementations in only analog and/or digital circuitry, and (b) combinations of hardware circuits and software, such as, as applicable: (i) a combination of analog and/or digital hardware circuit(s) with software/firmware and (ii) any portions of hardware processor(s) with software (including digital signal processor(s)), software, and memory(ies) that work together to cause an apparatus, such as a network function, to perform various functions) and (c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Device 400 may comprise memory 420. Memory 420 may comprise random-access memory and/or permanent memory. Memory 420 may comprise at least one RAM chip. Memory 420 may comprise solid-state, magnetic, optical and/or holographic memory, for example. Memory 420 may be at least in part accessible to processor 410. Memory 420 may be at least in part comprised in processor 410. Memory 420 may be means for storing information. Memory 420 may comprise computer instructions that processor 410 is configured to execute. When computer instructions configured to cause processor 410 to perform certain actions are stored in memory 420, and device 400 overall is configured to run under the direction of processor 410 using computer instructions from memory 420, processor 410 and/or its at least one processing core may be considered to be configured to perform said certain actions. Memory 420 may be at least in part comprised in processor 410. Memory 420 may be at least in part external to device 400 but accessible to device 400.

Device 400 may comprise a transmitter 430. Device 400 may comprise a receiver 440. Transmitter 430 and receiver 440 may be configured to transmit and receive, respectively, information in accordance with at least one cellular standard, such as a standard defined by the 3GPP. Transmitter 430 may comprise more than one transmitter. Receiver 440 may comprise more than one receiver. Transmitter 430 and/or receiver 440 may be configured to operate in accordance with a suitable communication standard.

Device 400 may comprise User Interface, UI, 450. UI 450 may comprise at least one of a display, a keyboard, a touchscreen, a vibrator arranged to signal to a user by causing device 400 to vibrate, a speaker and a microphone. A user may be able to operate device 400 via UI 450, for example to configure device 400 and/or functions it runs.

Processor 410 may be furnished with a transmitter arranged to output information from processor 410, via electrical leads internal to device 400, to other devices comprised in device 400. Such a transmitter may comprise a serial bus transmitter arranged to, for example, output information via at least one electrical lead to memory 420 for storage therein. Alternatively to a serial bus, the transmitter may comprise a parallel bus transmitter. Likewise processor 410 may comprise a receiver arranged to receive information in processor 410, via electrical leads internal to device 400, from other devices comprised in device 400. Such a receiver may comprise a serial bus receiver arranged to, for example, receive information via at least one electrical lead from receiver 440 for processing in processor 410. Alternatively to a serial bus, the receiver may comprise a parallel bus receiver.

Device 400 may comprise further devices not illustrated in FIGURE 4. In some example embodiments, device 400 lacks at least one device described above. For example, device 400 may not have UI 450.

Processor 410, memory 420, transmitter 430, receiver 440 and/or UI 450 may be interconnected by electrical leads internal to device 400 in a multitude of different ways. For example, each of the aforementioned devices may be separately connected to a master bus internal to device 400, to allow for the devices to exchange information. However, as the skilled person will appreciate, this is only one example and depending on the example embodiment various ways of interconnecting at least two of the aforementioned devices may be selected without departing from the scope of the present invention.

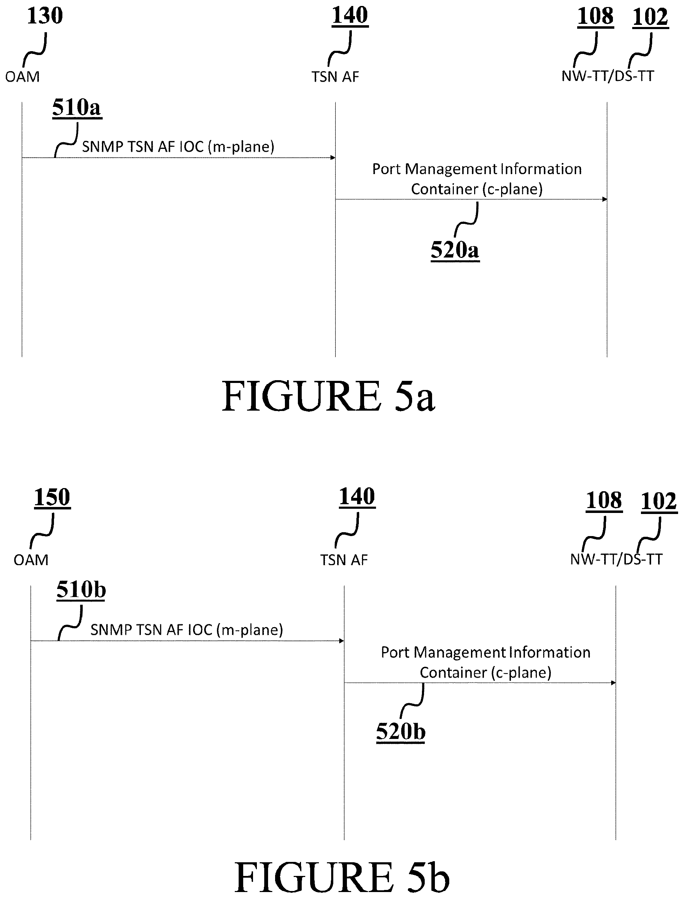

FIGURE 5a illustrates an OAM/m-plane configuration in accordance with at least some example embodiments. As shown in FIGURE 5a, an OAM 130 may transmit, at step 510a, the configuration information required to initialize the network function to operate according to a port-based network access control standard and a port-based medium access security standard on m-plane, for example in a SNMP TSN AF IOC, to a TSN AF 140. Upon receiving the configuration information, the TSN AF 140 may configure itself to operate according to the port-based network control standard and the port-based medium access security standard based on the configuration information.

At step 520a, the TSN AF 140 may transmit the configuration information to at least one other NF in the cellular communication system, such as the NW-TT 108 and/or the DS-TT 102. The configuration information may be transmitted by the TSN AF 140 on c-place, for example in a port management information container. Upon receiving the configuration information, the at least one other NF may configure itself to operate according to the port-based network control standard and the port-based medium access security standard based on the configuration information.

FIGURE 5b illustrates a CNC/c-plane configuration in accordance with at least some example embodiments. As shown in FIGURE 5b, a CNC 130 may transmit, at step 510b, the configuration information required to initialize the network function to operate according to a port-based network access control standard and a port-based medium access security standard on c-plane, for example in a SNMP TSN AF IOC, to a TSN AF 140. The CNC may use SNMP/MIB or NETCONF/YANG. Upon receiving the configuration information, the TSN AF 140 may configure the at least one other NF to operate according to the port-based network control standard and the port-based medium access security standard based on the configuration information.

At step 520b, the TSN AF 140 may transmit the configuration information to at least one other NF in the cellular communication system, such as the NW-TT 108 and/or the DS-TT 102. The configuration information may be transmitted by the TSN AF 140 on c-place, for example in a port management information container. Upon receiving the configuration information, the at least one other NF may configure itself to operate according to the port-based network control standard and the port-based medium access security standard based on the configuration information.

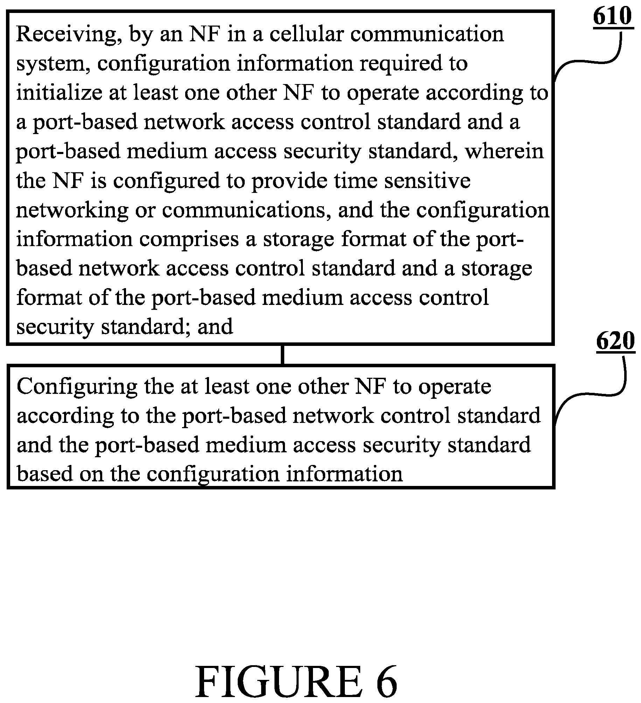

FIGURE 6 is a flow graph of a first method in accordance with at least some example embodiments. The phases of the illustrated first method may be performed by an NF configured to provide time sensitive networking or communications, or by a control device configured to control the functioning thereof, possibly when installed therein.

The first method may comprise, at step 610, receiving, by a network function in a cellular communication system, configuration information required to initialize at least one other network function to operate according to a port-based network access control standard and a port-based medium access security standard, wherein the network function is configured to provide time sensitive networking or communications , and the configuration information comprises a storage format of the port-based network access control standard and a storage format of the port-based medium access security standard. Also, the first method may comprise, at step 620, configuring the at least one other network function to operate according to the port-based network control standard and the port-based medium access security standard based on the configuration information.

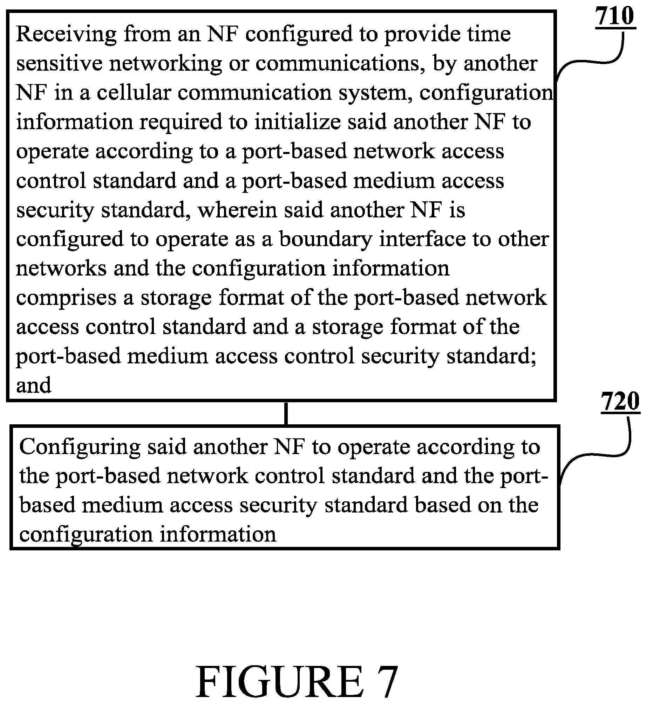

FIGURE 7 is a flow graph of a second method in accordance with at least some example embodiments. The phases of the illustrated second method may be performed by at least one other NF configured to operate as a boundary interface to other networks and as a security endpoint, or by a control device configured to control the functioning thereof, possibly when installed therein.

The second method may comprise, at step 710, receiving from a network function configured to provide time sensitive networking or communications, by another network function in a cellular communication system, configuration information required to initialize said another network function to operate according to a port-based network access control standard and a port-based medium access security standard, wherein said another network function is configured to operate as a boundary interface to other networks and as a security endpoint, and the configuration information comprises a storage format of the port-based network access control standard and a storage format of the port-based medium access security standard. Also, the second method may comprise, at step 720, configuring said another network function to operate according to the port-based network control standard and the port-based medium access security standard based on the configuration information.

It is to be understood that the example embodiments disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular example embodiments only and is not intended to be limiting.

Reference throughout this specification to one example embodiment or an example embodiment means that a particular feature, structure, or characteristic described in connection with the example embodiment is included in at least one example embodiment. Thus, appearances of the phrases "in one example embodiment" or "in an example embodiment" in various places throughout this specification are not necessarily all referring to the same example embodiment. Where reference is made to a numerical value using a term such as, for example, about or substantially, the exact numerical value is also disclosed.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various example embodiments and examples may be referred to herein along with alternatives for the various components thereof. It is understood that such example embodiments, examples, and alternatives are not to be construed as de facto equivalents of one another, but are to be considered as separate and autonomous representations.

In an example embodiment, an apparatus, such as, for example, the NF or the at least one other NF, or a device controlling functioning thereof, may comprise means for carrying out the example embodiments described above and any combination thereof.

In an example embodiment, a computer program may be configured to cause a method in accordance with the example embodiments described above and any combination thereof. In an exemplary example embodiment, a computer program product, embodied on a non-transitory computer readable medium, may be configured to control a processor to perform a process comprising the example embodiments described above and any combination thereof.

In an example embodiment, an apparatus, such as, for example, the NF or the at least one other NF, or a device controlling functioning thereof, may comprise at least one processor, and at least one memory including computer program code, wherein the at least one memory and the computer program code are configured to, with the at least one processor, cause the apparatus at least to perform the example embodiments described above and any combination thereof.

Furthermore, the described features, structures, or characteristics may be combined in any suitable manner in one or more example embodiments. In the preceding description, numerous specific details are provided, such as examples of lengths, widths, shapes, etc., to provide a thorough understanding of example embodiments of the invention. One skilled in the relevant art will recognize, however, that the invention may be practiced without one or more of the specific details, or with other methods, components, materials, etc. In other instances, well-known structures, materials, or operations are not shown or described in detail to avoid obscuring aspects of the invention.

While the forgoing examples are illustrative of the principles of the example embodiments in one or more particular applications, it will be apparent to those of ordinary skill in the art that numerous modifications in form, usage and details of implementation may be made without the exercise of inventive faculty, and without departing from the principles and concepts of the invention. Accordingly, it is not intended that the invention be limited, except as by the claims set forth below.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", that is, a singular form, throughout this document does not exclude a plurality.

### INDUSTRIAL APPLICABILITY

At least some example embodiments find industrial application in cellular communication systems, such as 5G systems, and possibly in other cellular communication systems in the future wherein it is desirable to enhance security.

### ACRONYMS LIST

- 3GPP: 3^{rd} Generation Partnership Project
- 5GS: 5G System
- AF: Application Function
- AMF: Access and Mobility Function
- ARP: Address Resolution Protocol
- BS: Base Station
- BMCA: Best Master Clock Algorithm
- CNC: Central Network Controller
- DS-TT: Device-Side TSN Translator
- DoS: Denial of Service
- GM: Grand Master
- IEEE: Institute of Electrical and Electronics Engineers
- IOC: Information Object Class
- IP: Internet Protocol
- MAC: Medium Access Control
- MIB: Management Information Base
- MKA: MACsec Key Agreement
- NEF: Network Exposure Function
- NF: Network Function
- NRM: Network Resource Model
- NW-TT: Network-Side TSN Translator
- OAM: Orchestration & Automation Management
- PAE: Port Access Entity
- PTP: Precision Time Protocol
- SMF: Session Management Function
- TSC: Time Sensitive Communication
- TSN: Time Sensitive Networking
- UE: User Equipment
- UPF: User Plane Function

### REFERENCE SIGNS LIST

| | |
|---|---|
| 100 | 5GS |
| 102 | DS-TT |
| 104 | UE |
| 106 | BS |
| 108 | NW-TT |
| 110 | TSN |
| 112 | TSN endstation |
| 114 | TSN node |
| 116 | TSN GM clock |
| 120 | Authentication server |
| 130 | OAM |
| 140 | TSN AF |
| 150 | CNC |
| 400 - 450 | Structure of the apparatus of FIGURE 4 |
| 510a, 510b, 520a, 520b | Steps in FIGUREs 5a and 5b |
| 610 - 620 | Phases of the method in FIGURE 6 |
| 710 - 720 | Phases of the method in FIGURE 7 |

## Claims

1. An apparatus, comprising:
- means for receiving, by a network function (140), in a cellular communication system (100), configuration information required to initialize at least one other network function (102, 104, 108) to operate according to a port-based network access control standard and a port-based medium access security standard, wherein the network function (140) is configured to provide time sensitive networking or communications, and the configuration information comprises a storage format of the port-based network access control standard and a storage format of the port-based medium access security standard; and
- means for configuring the at least one other network function (102, 104, 108) to operate according to the port-based network access control standard and the port-based medium access security standard based on the configuration information.

2. An apparatus according to claim 1, wherein the port-based network access control standard is a IEEE 802.1X standard and the port-based medium access security standard is a IEEE 802.1AE standard.

3. An apparatus according to claim 1 or claim 2, wherein the configuration information is received in an information object class from m-plane via an orchestration, automation & management function or from c-plane via a configuring network function.

4. An apparatus according to any of the preceding claims, wherein said means for configuring comprise means for transmitting the configuration information to the at least one other network function (102, 104, 108) in the cellular communication system (100), wherein the at least one other network function is configured to operate as a boundary interface to other networks and as a security endpoint.

5. An apparatus according to claim 4, wherein the configuration information is transmitted in a port management information table.

6. An apparatus according to claim 4 or claim 5, wherein the network function is a time sensitive networking application function (140) configured to operate in a time sensitive networking bridge mode and the at least one other network function comprises a device-side time sensitive networking translator (102) and/or a network-side time sensitive networking translator (108).

7. An apparatus according to any preceding claim, wherein the means comprise at least one processor; and at least one memory including computer program code, the at least one memory and computer program code configured to, with the at least one processor, cause the performance of the apparatus.

8. An apparatus, comprising:
- means for receiving from a network function (140) configured to provide time sensitive networking or communications, by another network function (102, 104, 108) in a cellular communication system (100), configuration information required to initialize said another network function (102, 104, 108) to operate according to a port-based network access control standard and a port-based medium access security standard, wherein said another network function (102, 104, 108) is configured to operate as a boundary interface to other networks and as a security endpoint, and the configuration information comprises a storage format of the port-based network access control standard and a storage format of the port-based medium access security standard; and
- means for configuring said another network function (102, 104, 108) to operate according to the port-based network access control standard and the port-based medium access security standard based on the configuration information.

9. An apparatus according to claim 8, wherein the port-based network access control standard is a IEEE 802.1X standard and the port-based medium access security standard is a IEEE 802.1AE standard.

10. An apparatus according to claim 8 or claim 9, wherein the configuration information is received in a port management information table.

11. An apparatus according to any of claims 8 to 10, wherein the means comprise at least one processor; and at least one memory including computer program code, the at least one memory and computer program code configured to, with the at least one processor, cause the performance of the apparatus.

12. A method comprising:
- receiving (610), by a network function (140) in a cellular communication system (100), configuration information required to initialize at least one other network function (102, 104, 108) to operate according to a port-based network access control standard and a port-based medium access security standard, wherein the network function (140) is configured to provide time sensitive networking or communications, and the configuration information comprises a storage format of the port-based network access control standard and a storage format of the port-based medium access security standard; and
- configuring (620) the at least one other network function (102, 104, 108) to operate according to the port-based network access control standard and the port-based medium access security standard based on the configuration information.

13. A method comprising:
- receiving (710) from a network function (140) configured to provide time sensitive networking or communications, by another network function (102, 104, 108) in a cellular communication system (100), configuration information required to initialize said another network function (102, 104, 108) to operate according to a port-based network access control standard and a port-based medium access security standard, wherein said another network function (102, 104, 108) is configured to operate as a boundary interface to other networks and as a security endpoint, and the configuration information comprises a storage format of the port-based network access control standard and a storage format of the port-based medium access security standard; and
- configuring (720) said another network function (102, 104, 108) to operate according to the port-based network access control standard and the port-based medium access security standard based on the configuration information.

14. A computer readable medium comprising program instructions stored thereon for performing at least the following:
- receiving (610), by a network function (140) in a cellular communication system (100), configuration information required to initialize at least one other network function (102, 104, 108) to operate according to a port-based network access control standard and a port-based medium access security standard, wherein the network function (140) is configured to provide time sensitive networking or communications, and the configuration information comprises a storage format of the port-based network access control standard and a storage format of the port-based medium access security standard; and
- configuring (620) the at least one other network function (102, 104, 108) to operate according to the port-based network access control standard and the port-based medium access security standard based on the configuration information.

15. A computer readable medium comprising program instructions stored thereon for performing at least the following:
- receiving (710) from a network function (140) configured to provide time sensitive networking or communications, by another network function (102, 104, 108) in a cellular communication system (100), configuration information required to initialize said another network function (102, 104, 108) to operate according to a port-based network access control standard and a port-based medium access security standard, wherein said another network function (102, 104, 108) is configured to operate as a boundary interface to other networks and as a security endpoint, and the configuration information comprises a storage format of the port-based network access control standard and a storage format of the port-based medium access security standard; and
- configuring (720) said another network function (102, 104, 108) to operate according to the port-based network access control standard and the port-based medium access security standard based on the configuration information.

## Patentansprüche

1. Einrichtung, die Folgendes umfasst:
- Mittel zum Empfangen von Auslegungsinformationen, die erforderlich sind, um mindestens eine weitere Netzwerkfunktion (102, 104, 108) zu initialisieren, um gemäß einem portbasierten Netzwerkzugangssteuerstandard und einem portbasierten Medienzugangssicherheitsstandard betrieben zu werden, von einer Netzwerkfunktion (140) in einem zellularen Kommunikationssystem (100), wobei die Netzwerkfunktion (140) dazu ausgelegt ist, eine zeitsensitive Vernetzung oder Kommunikation bereitzustellen, und die Auslegungsinformationen ein Speicherformat des portbasierten Netzwerkzugangssteuerstandards und ein Speicherformat des portbasierten Medienzugangssicherheitsstandards umfassen; und
- Mittel zum Auslegen der mindestens einen weiteren Netzwerkfunktion (102, 104, 108), um gemäß dem portbasierten Netzwerkzugangssteuerstandard und dem portbasierten Medienzugangssicherheitsstandard auf Basis der Auslegungsinformationen betrieben zu werden.

2. Einrichtung nach Anspruch 1, wobei der portbasierte Netzwerkzugangssteuerstandard ein Standard nach IEEE 802.1X ist und der portbasierte Medienzugangssicherheitsstandard ein Standard nach IEEE 802.1AE ist.

3. Einrichtung nach Anspruch 1 oder Anspruch 2, wobei die Auslegungsinformationen in einer Informationsobjektklasse via eine Orchestrierungs-, Automatisierungs- & Verwaltungsfunktion von einer m-Ebene oder via eine auslegende Netzwerkfunktion von einer c-Ebene empfangen werden.

4. Einrichtung nach einem der vorhergehenden Ansprüche, wobei die Mittel zum Auslegen Mittel zum Übertragen der Auslegungsinformationen zu der mindestens einen weiteren Netzwerkfunktion (102, 104, 108) im zellularen Kommunikationssystem (100) umfassen, wobei die mindestens eine weitere Netzwerkfunktion dazu ausgelegt ist, als eine Grenzschnittstelle zu anderen Netzwerken und als ein Sicherheitsendpunkt betrieben zu werden.

5. Einrichtung nach Anspruch 4, wobei die Auslegungsinformationen in einer Portverwaltungsinformationstabelle übertragen werden.

6. Einrichtung nach Anspruch 4 oder Anspruch 5, wobei die Netzwerkfunktion eine zeitsensitive Vernetzungsanwendungsfunktion (140) ist, die dazu ausgelegt ist, in einem zeitsensitiven Vernetzungsbrückenmodus betrieben zu werden, und die mindestens eine weitere Netzwerkfunktion einen vorrichtungsseitigen zeitsensitiven Vernetzungsübersetzer (102) und/oder einen netzwerkseitigen zeitsensitiven Vernetzungsübersetzer (108) umfasst.

7. Einrichtung nach einem der vorhergehenden Ansprüche, wobei die Mittel mindestens einen Prozessor und mindestens einen Speicher, der Computerprogrammcode beinhaltet, umfassen, wobei der mindestens eine Speicher und der Computerprogrammcode dazu ausgelegt sind, mit dem mindestens einen Prozessor die Durchführung der Einrichtung zu veranlassen.

8. Einrichtung, die Folgendes umfasst:
- Mittel zum Empfangen von Auslegungsinformationen, die erforderlich sind, um die weitere Netzwerkfunktion (102, 104, 108) zu initialisieren, um gemäß einem portbasierten Netzwerkzugangssteuerstandard und einem portbasierten Medienzugangssicherheitsstandard betrieben zu werden, durch eine weitere Netzwerkfunktion (102, 104, 108) in einem zellularen Kommunikationssystem (100) von einer Netzwerkfunktion (140), die dazu ausgelegt ist, eine zeitsensitive Vernetzung oder Kommunikation bereitzustellen, wobei die weitere Netzwerkfunktion (102, 104, 108) dazu ausgelegt ist, als eine Grenzschnittstelle zu anderen Netzwerken und als ein Sicherheitsendpunkt betrieben zu werden, und die Auslegungsinformationen ein Speicherformat des portbasierten Netzwerkzugangssteuerstandards und ein Speicherformat des portbasierten Medienzugangssicherheitsstandards umfassen; und
- Mittel zum Auslegen der weiteren Netzwerkfunktion (102, 104, 108), um gemäß dem portbasierten Netzwerkzugangssteuerstandard und dem portbasierten Medienzugangssicherheitsstandard auf Basis der Auslegungsinformationen betrieben zu werden.

9. Einrichtung nach Anspruch 8, wobei der portbasierte Netzwerkzugangssteuerstandard ein Standard nach IEEE 802.1X ist und der portbasierte Medienzugangssicherheitsstandard ein Standard nach IEEE 802.1AE ist.

10. Einrichtung nach Anspruch 8 oder Anspruch 9, wobei die Auslegungsinformationen in einer Portverwaltungsinformationstabelle empfangen werden.

11. Einrichtung nach einem der Ansprüche 8 bis 10, wobei die Mittel mindestens einen Prozessor und mindestens einen Speicher, der Computerprogrammcode beinhaltet, umfassen, wobei der mindestens eine Speicher und der Computerprogrammcode dazu ausgelegt sind, mit dem mindestens einen Prozessor die Durchführung der Einrichtung zu veranlassen.

12. Verfahren, das Folgendes umfasst:
- Empfangen (610) von Auslegungsinformationen, die erforderlich sind, um mindestens eine weitere Netzwerkfunktion (102, 104, 108) zu initialisieren, um gemäß einem portbasierten Netzwerkzugangssteuerstandard und einem portbasierten Medienzugangssicherheitsstandard betrieben zu werden, von einer Netzwerkfunktion (140) in einem zellularen Kommunikationssystem (100), wobei die Netzwerkfunktion (140) dazu ausgelegt ist, eine zeitsensitive Vernetzung oder Kommunikation bereitzustellen, und die Auslegungsinformationen ein Speicherformat des portbasierten Netzwerkzugangssteuerstandards und ein Speicherformat des portbasierten Medienzugangssicherheitsstandards umfassen; und
- Auslegen (620) der mindestens einen weiteren Netzwerkfunktion (102, 104, 108), um gemäß dem portbasierten Netzwerkzugangssteuerstandard und dem portbasierten Medienzugangssicherheitsstandard auf Basis der Auslegungsinformationen betrieben zu werden.

13. Verfahren, das Folgendes umfasst:
- Empfangen (710) von Auslegungsinformationen, die erforderlich sind, um mindestens eine weitere Netzwerkfunktion (102, 104, 108) zu initialisieren, um gemäß einem portbasierten Netzwerkzugangssteuerstandard und einem portbasierten Medienzugangssicherheitsstandard betrieben zu werden, durch eine weitere Netzwerkfunktion (102, 104, 108) in einem zellularen Kommunikationssystem (100) von einer Netzwerkfunktion (140), die dazu ausgelegt ist, eine zeitsensitive Vernetzung oder Kommunikation bereitzustellen, wobei die weitere Netzwerkfunktion (102, 104, 108) dazu ausgelegt ist, als eine Grenzschnittstelle zu anderen Netzwerken und als ein Sicherheitsendpunkt betrieben zu werden, und die Auslegungsinformationen ein Speicherformat des portbasierten Netzwerkzugangssteuerstandards und ein Speicherformat des portbasierten Medienzugangssicherheitsstandards umfassen; und
- Auslegen (720) der weiteren Netzwerkfunktion (102, 104, 108), um gemäß dem portbasierten Netzwerkzugangssteuerstandard und dem portbasierten Medienzugangssicherheitsstandard auf Basis der Auslegungsinformationen betrieben zu werden.

14. Computerlesbares Medium, das darauf gespeicherte Programmanweisungen zum Durchführen von mindestens Folgendem umfasst:
- Empfangen (610) von Auslegungsinformationen, die erforderlich sind, um mindestens eine weitere Netzwerkfunktion (102, 104, 108) zu initialisieren, um gemäß einem portbasierten Netzwerkzugangssteuerstandard und einem portbasierten Medienzugangssicherheitsstandard betrieben zu werden, von einer Netzwerkfunktion (140) in einem zellularen Kommunikationssystem (100), wobei die Netzwerkfunktion (140) dazu ausgelegt ist, eine zeitsensitive Vernetzung oder Kommunikation bereitzustellen, und die Auslegungsinformationen ein Speicherformat des portbasierten Netzwerkzugangssteuerstandards und ein Speicherformat des portbasierten Medienzugangssicherheitsstandards umfassen; und
- Auslegen (620) der mindestens einen weiteren Netzwerkfunktion (102, 104, 108), um gemäß dem portbasierten Netzwerkzugangssteuerstandard und dem portbasierten Medienzugangssicherheitsstandard auf Basis der Auslegungsinformationen betrieben zu werden.

15. Computerlesbares Medium, das darauf gespeicherte Programmanweisungen zum Durchführen von mindestens Folgendem umfasst:
- Empfangen (710) von Auslegungsinformationen, die erforderlich sind, um mindestens eine weitere Netzwerkfunktion (102, 104, 108) zu initialisieren, um gemäß einem portbasierten Netzwerkzugangssteuerstandard und einem portbasierten Medienzugangssicherheitsstandard betrieben zu werden, durch eine weitere Netzwerkfunktion (102, 104, 108) in einem zellularen Kommunikationssystem (100) von einer Netzwerkfunktion (140), die dazu ausgelegt ist, eine zeitsensitive Vernetzung oder Kommunikation bereitzustellen, wobei die weitere Netzwerkfunktion (102, 104, 108) dazu ausgelegt ist, als eine Grenzschnittstelle zu anderen Netzwerken und als ein Sicherheitsendpunkt betrieben zu werden, und die Auslegungsinformationen ein Speicherformat des portbasierten Netzwerkzugangssteuerstandards und ein Speicherformat des portbasierten Medienzugangssicherheitsstandards umfassen; und
- Auslegen (720) der weiteren Netzwerkfunktion (102, 104, 108), um gemäß dem portbasierten Netzwerkzugangssteuerstandard und dem portbasierten Medienzugangssicherheitsstandard auf Basis der Auslegungsinformationen betrieben zu werden.

## Revendications

1. Appareil, comprenant :
- des moyens pour recevoir, par une fonction de réseau (140) dans un système de communication cellulaire (100), des informations de configuration nécessaires pour initialiser au moins une autre fonction de réseau (102, 104, 108) pour fonctionner conformément à une norme de contrôle d'accès au réseau basé sur le port et à une norme de sécurité d'accès au support basé sur le port, dans lequel la fonction de réseau (140) est configurée pour fournir une mise en réseau ou des communications sensibles au temps, et les informations de configuration comprennent un format de stockage de la norme de contrôle d'accès au réseau basé sur le port et un format de stockage de la norme de sécurité d'accès au support basé sur le port ; et
- des moyens pour configurer l'au moins une autre fonction de réseau (102, 104, 108) pour fonctionner conformément à la norme de contrôle d'accès au réseau basé sur le port et à la norme de sécurité d'accès au support basé sur le port sur la base des informations de configuration.

2. Appareil selon la revendication 1, dans lequel la norme de contrôle d'accès au réseau basé sur le port est une norme IEEE 802.1X et la norme de sécurité d'accès au support basé sur le port est une norme IEEE 802.1AE.

3. Appareil selon la revendication 1 ou la revendication 2, dans lequel les informations de configuration sont reçues dans une classe d'objet d'informations à partir d'un plan m via une fonction d'orchestration, d'automatisation et de gestion, ou à partir d'un plan c via une fonction de réseau de configuration.

4. Appareil selon l'une des revendications précédentes, dans lequel lesdits moyens de configuration comprennent des moyens pour transmettre les informations de configuration à l'au moins une autre fonction de réseau (102, 104, 108) dans le système de communication cellulaire (100), dans lequel l'au moins une autre fonction de réseau est configurée pour fonctionner comme une interface limite vers d'autres réseaux et comme un point d'extrémité de sécurité.

5. Appareil selon la revendication 4, dans lequel les informations de configuration sont transmises dans une table d'informations de gestion de port.

6. Appareil selon la revendication 4 ou la revendication 5, dans lequel la fonction de réseau est une fonction d'application de mise en réseau sensible au temps (140) configurée pour fonctionner dans un mode de pont de mise en réseau sensible au temps, et l'au moins une autre fonction de réseau comprend un traducteur de mise en réseau sensible au temps (102) côté dispositif et/ou un traducteur de mise en réseau sensible au temps (108) côté réseau.

7. Appareil selon l'une des revendications précédentes, dans lequel les moyens comprennent au moins un processeur ; et au moins une mémoire comportent un code de programme informatique, l'au moins une mémoire et le code de programme informatique étant configurés pour, avec l'au moins un processeur, provoquer la performance de l'appareil.

8. Appareil, comprenant :
- des moyens pour recevoir d'une fonction de réseau (140) configurée pour fournir une mise en réseau ou des communications sensibles au temps, par une autre fonction de réseau (102, 104, 108) dans un système de communication cellulaire (100), des informations de configuration nécessaires pour initialiser ladite une autre fonction de réseau (102, 104, 108) pour fonctionner conformément à une norme de contrôle d'accès au réseau basé sur le port et à une norme de sécurité d'accès au support basé sur le port, dans lequel ladite une autre fonction de réseau (102, 104, 108) est configurée pour fonctionner comme une interface limite vers d'autres réseaux et comme un point d'extrémité de sécurité, et les informations de configuration comprennent un format de stockage de la norme de contrôle d'accès au réseau basé sur le port et un format de stockage de la norme de sécurité d'accès au support basé sur le port ; et
- des moyens pour configurer ladite une autre fonction de réseau (102, 104, 108) pour fonctionner conformément à la norme de contrôle d'accès au réseau basé sur le port et à la norme de sécurité d'accès au support basé sur le port sur la base des informations de configuration.

9. Appareil selon la revendication 8, dans lequel la norme de contrôle d'accès au réseau basé sur le port est une norme IEEE 802.1X et la norme de sécurité d'accès au support basé sur le port est une norme IEEE 802.1AE.

10. Appareil selon la revendication 8 ou la revendication 9, dans lequel les informations de configuration sont reçues dans une table d'informations de gestion de port.

11. Appareil selon l'une des revendications 8 à 10, dans lequel les moyens comprennent au moins un processeur ; et au moins une mémoire comportent un code de programme informatique, l'au moins une mémoire et le code de programme informatique étant configurés pour, avec l'au moins un processeur, provoquer la performance de l'appareil.

12. Procédé comprenant les étapes suivantes :
- recevoir (610), par une fonction de réseau (140) dans un système de communication cellulaire (100), des informations de configuration nécessaires pour initialiser au moins une autre fonction de réseau (102, 104, 108) pour fonctionner conformément à une norme de contrôle d'accès au réseau basé sur le port et à une norme de sécurité d'accès au support basé sur le port, dans lequel la fonction de réseau (140) est configurée pour fournir une mise en réseau ou des communications sensibles au temps, et les informations de configuration comprennent un format de stockage de la norme de contrôle d'accès au réseau basé sur le port et un format de stockage de la norme de sécurité d'accès au support basé sur le port ; et
- configurer (620) l'au moins une autre fonction de réseau (102, 104, 108) pour fonctionner conformément à la norme de contrôle d'accès au réseau basé sur le port et à la norme de sécurité d'accès au support basé sur le port sur la base des informations de configuration.

13. Procédé comprenant les étapes suivantes :
- recevoir (710) d'une fonction de réseau (140) configurée pour fournir une mise en réseau ou des communications sensibles au temps, par une autre fonction de réseau (102, 104, 108) dans un système de communication cellulaire (100), des informations de configuration nécessaires pour initialiser ladite une autre fonction de réseau (102, 104, 108) pour fonctionner conformément à une norme de contrôle d'accès au réseau basé sur le port et à une norme de sécurité d'accès au support basé sur le port, dans lequel ladite une autre fonction de réseau (102, 104, 108) est configurée pour fonctionner comme une interface limite vers d'autres réseaux et comme un point d'extrémité de sécurité, et les informations de configuration comprennent un format de stockage de la norme de contrôle d'accès au réseau basé sur le port et un format de stockage de la norme de sécurité d'accès au support basé sur le port ; et
- configurer (720) ladite une autre fonction de réseau (102, 104, 108) pour fonctionner conformément à la norme de contrôle d'accès au réseau basé sur le port et à la norme de sécurité d'accès au support basé sur le port sur la base des informations de configuration.

14. Support lisible par ordinateur comprenant des instructions de programme stockées sur celui-ci pour réaliser au moins les opérations suivantes :
- recevoir (610), par une fonction de réseau (140) dans un système de communication cellulaire (100), des informations de configuration nécessaires pour initialiser au moins une autre fonction de réseau (102, 104, 108) pour fonctionner conformément à une norme de contrôle d'accès au réseau basé sur le port et à une norme de sécurité d'accès au support basé sur le port, dans lequel la fonction de réseau (140) est configurée pour fournir une mise en réseau ou des communications sensibles au temps, et les informations de configuration comprennent un format de stockage de la norme de contrôle d'accès au réseau basé sur le port et un format de stockage de la norme de sécurité d'accès au support basé sur le port ; et
- configurer (620) l'au moins une autre fonction de réseau (102, 104, 108) pour fonctionner conformément à la norme de contrôle d'accès au réseau basé sur le port et à la norme de sécurité d'accès au support basé sur le port sur la base des informations de configuration.

15. Support lisible par ordinateur comprenant des instructions de programme stockées sur celui-ci pour réaliser au moins les opérations suivantes :
- recevoir (710) d'une fonction de réseau (140) configurée pour fournir une mise en réseau ou des communications sensibles au temps, par une autre fonction de réseau (102, 104, 108) dans un système de communication cellulaire (100), des informations de configuration nécessaires pour initialiser ladite une autre fonction de réseau (102, 104, 108) pour fonctionner conformément à une norme de contrôle d'accès au réseau basé sur le port et à une norme de sécurité d'accès au support basé sur le port, dans lequel ladite une autre fonction de réseau (102, 104, 108) est configurée pour fonctionner comme une interface limite vers d'autres réseaux et comme un point d'extrémité de sécurité, et les informations de configuration comprennent un format de stockage de la norme de contrôle d'accès au réseau basé sur le port et un format de stockage de la norme de sécurité d'accès au support basé sur le port ; et
- configurer (720) ladite une autre fonction de réseau (102, 104, 108) pour fonctionner conformément à la norme de contrôle d'accès au réseau basé sur le port et à la norme de sécurité d'accès au support basé sur le port sur la base des informations de configuration.
